# EUROPEAN PATENT APPLICATION

(11) **EP 2 434 496 A1**
(43) Date of publication of application: **28.03.2012**
(21) Application number: 10777527.2
(22) Date of filing: 11.05.2010
(51) Int. Cl.: G21C 9/004, G21C 15/18, G21D 1/00

(54) **NUCLEAR REACTOR CONTAINMENT STRUCTURE**

(30) Priority: 20.05.2009 JP 2009122497
(71) Applicant: Mitsubishi Heavy Industries, Ltd., Tokyo 108-8215 (JP)
(72) Inventor: UDA, Nobuki, Hyogo 676-8686 (JP); FUKUDA, Hideo, Nagasaki 851-0392 (JP); ISHIHARA, Nobuo, Hyogo 676-8686 (JP); MURATA, Kazutoyo, Hyogo 676-8686 (JP); ARIKAWA, Hiroshi, Tokyo 108-8215 (JP); SHIBATO, Kaname, Tokyo 108-8215 (JP); MATSUOKA, Hiroshi, Tokyo 108-8215 (JP)
(74) Representative: Intès, Didier Gérard André
(86) International application number: PCT/JP2010/003199
(87) International publication number: WO 2010/134288

(57) **Abstract**

The reactor containment structure (1) is provided with a reactor containment vessel (10), a reactor containment chamber (11) installed inside the reactor containment vessel (10) to contain a nuclear power reactor (5), a pool (12) installed inside the reactor containment vessel (10) so as to be below the reactor containment chamber (11) adjacently and in which an emergency cooling liquid (W) is stored, an opening part (11c) for allowing the emergency cooling liquid (W) to flow from the reactor containment chamber (11) into the pool (12), a sump (13) installed below the pool (12), a debris filtering body (14) installed at the sump (13) to filter debris (D) contained in the emergency cooling liquid (W), a pumping system (20) which sucks the emergency cooling liquid (W) from the sump (13) and discharges the emergency cooling liquid (W) into the reactor containment chamber (11), and a debris trapping part (30) installed in the pool (12) to trap the debris (D), wherein the debris trapping part (30) intersects with a flow path (R) of the emergency cooling liquid. (W) flowing from the opening part (11c) into the pool (12) and flowing toward the sump (13).

## Description

### TECHNICAL FIELD

The present invention relates to a reactor containment structure which is used in a pressurized water reactor.
The application claims the right of priority to Japanese Patent Application No. 2009-122497 filed on May 20, 2009, the content cited herewith.

### BACKGROUND ART

As widely known, in a pressurized water reactor, pressure is applied so as not to boil a primary coolant (light water). The primary coolant is heated by thermal energy generated by nuclear fission reactions of a nuclear power reactor and the heated primary coolant heated to a high temperature is fed to a steam generator. Thereby, a secondary coolant (light water) is boiled to rotate a turbine generator with high temperature and high pressure steam, thereby generating electric power.

In such a pressurized water reactor, a safety structure is adopted in order to prevent a nuclear power reactor from being excessively heated on occurrence of a loss-of-primary-coolant accident. The safety structure is provided mainly with a reactor containment vessel and a pumping system.
The reactor containment vessel is provided mainly with a reactor containment chamber, a pool (sump pool) and a sump. The reactor containment chamber contains a nuclear power reactor. The pool is installed inside the reactor containment vessel so as to be below the reactor containment chamber adjacently, and an emergency cooling liquid is stored in the pool. The sump is installed at a lower part of the pool. Further, at a lower part of the reactor containment chamber, there is installed an opening part for allowing the emergency cooling liquid inside the reactor containment chamber to flow into the pool.
The pumping system sucks the emergency cooling liquid from the sump and discharges the liquid from an upper part of the reactor containment chamber.
In the above-described safety structure, the emergency cooling liquid is sucked by the pumping system from the sump at the lower part of the pool and discharged from the upper part of the reactor containment chamber. The discharged emergency cooling liquid flows into the pool from the opening part of the reactor containment chamber. And, the discharged cooling liquid is again sucked by the pumping system to circulate inside the safety structure.

In the above-described safety structure, on occurrence of a loss-of-priniary-coolant accident, ejection of a high-pressure primary coolant produces debris such as broken pieces of heat-insulating materials and metal pieces, and the debris flows into the pool. Therefore, a debris filtering body such as a sump screen is installed at the sump so that no debris is sucked into the pumping system. However, a large quantity of the debris adhered to the debris filtering body will result in an increase in load of the pumping system or a reduction in circulation efficiency. Therefore, it is desirable to avoid adhesion of a large quantity of debris to the debris filtering body.

For example, the reactor containment structure disclosed in Patent Document 1 below is provided at an opening on a floor of a reactor containment chamber with a second sump which functions as a temporary storage tank for emergency cooling water. Further, a second screen is installed at a part where water flows from the second sump to the pool. That is, debris is trapped by the second screen so as not to flow into the pool, thereby inhibiting adhesion of the debris to the sump screen.

### Prior Art Document

### Patent Document

Patent Document 1: Japanese Unexamined Patent Application, First Publication No. He-7-260977

### SUMMARY OF THE INVENTION

### Problems to be Solved by the Invention

However, the above-described pressurized water reactor has a problem that it is impossible to install the second sump at every opening. That is, it is structurally impossible to install the above-described second sump, for example, at an opening part of a companion way installed between the pool and the reactor containment chamber. Further, it can be considered to make the opening part openable/closable. However, if the opening part of the companion way is made openable/closable, there are problems such as a reduction in maintenance performance and a reduction in circulation efficiency of emergency cooling water.

The present invention provides a reactor containment structure which is capable of inhibiting adhesion of debris to a debris filtering body and simplifying a configuration of an opening part.

### Solutions of the Problems

In order to achieve the above object, the reactor containment structure of the present invention is configured with the following.
A reactor containment vessel which is provided with a reactor containment chamber having an opening part communicate with a lower floor at a lower part of a room containing a nuclear power reactor, a sump pool installed on the lower floor to store an emergency cooling liquid, and a sump installed at a lower part of the sump pool.
A debris filtering body which is installed at the sump.
A pump body which sucks the emergency cooling liquid from the sump to discharge the emergency cooling liquid from an upper part of the reactor containment chamber.
In the above-configured reactor containment structure, the emergency cooling liquid discharged from the upper part of the reactor containment chamber flows again into the sump pool from the opening part of the reactor containment chamber and the emergency cooling liquid circulates.
In the reactor containment structure of the present invention, a debris trapping part is installed in such a manner as to intersect with a flow path of the emergency cooling liquid in the sump pool.
That is, in order to solve the above problems, the reactor containment structure of the present invention is configured with the following.
A reactor containment vessel.
A reactor containment chamber which is installed inside the reactor containment vessel to contain a nuclear power reactor.
A pool which is installed inside the reactor containment vessel so as to be below the reactor containment chamber adjacently and in which an emergency cooling liquid is stored.
An opening part which allows the emergency cooling liquid to flow from the reactor containment chamber to the pool.
A sump which is installed below the pool.
A debris filtering body which is installed at the sump to filter debris contained in the emergency cooling liquid.
A pumping system which sucks the emergency cooling liquid from the sump and discharges the emergency cooling liquid into the reactor containment chamber.
A debris trapping part which is installed in the pool to trap the debris.
In this case, the debris trapping part is installed in such a manner as to intersect with a flow path of the emergency cooling liquid flowing from the opening part into the pool and flowing toward the sump.
According to this configuration, the debris trapping part traps the debris on the flow path of the emergency cooling liquid flowing into the pool and flowing toward the sump. Therefore, the debris contained in the emergency cooling liquid is inhibited from arriving at the debris filtering body. Thereby, it is possible to inhibit adhesion of the debris to the debris filtering body.
Further, since a necessity for installing a sump structure at an opening part or installing an opening/closing mechanism is eliminated, the opening part can be simplified in configuration.
Therefore, according to the reactor containment structure of the present invention, it is possible to inhibit adhesion of the debris to the debris filtering body and simplify a configuration of the opening part.

Further, the debris trapping part may have at a bottom part of the sump pool a trap trench installed so as to intersect with a flow path of the emergency cooling liquid.
That is, the debris trapping part may include at a bottom part of the pool a trap trench which is installed so as to extend in such a direction that intersects with a flow path of the emergency cooling liquid.
Some debris contained in the emergency cooling liquid which has flowed into the pool moves along the flow path of the emergency cooling liquid so as to turn over around the bottom part of the pool. The debris soon arrives at the trap trench extending in a direction intersecting with the flow path of the emergency cooling liquid. The debris which has arrived at the trap trench enters inside the trap trench and is trapped by the trap trench. Therefore, it is possible to trap the debris more reliably by the trap trench extending in a direction intersecting with the flow path of the emergency cooling liquid.

Further, the trap trench may surround the debris filtering body.
The debris contained in the emergency cooling liquid which has flown into the pool moves so as to turn over around the bottom part of the pool toward the debris filtering body from every direction directed to the debris filtering body.
In this case, if the trap trench surrounds the debris filtering body, the debris moving to the debris filtering body from every direction can be more reliably trapped by the trap trench.

Further, the debris trapping part may have a downstream gate extending upward from an edge at the downstream-side of the flow path among edges of the trap trench.
That is, the debris trapping part may include a downstream gate extending upward from an edge of the trap trench, where the edge of the trap trench is positioned at the downstream-side with respect to the flow path.
According to this configuration, currents of the emergency cooling liquid collide with the downstream gate. Then, there are caused currents of the emergency cooling liquid which flow inside the trap trench. Thereby, the debris moving so as to turn over around the bottom part of the pool flows together with the currents of the emergency cooling liquid and enters inside the trap trench. Therefore, it is possible to trap the debris efficiently.

Further, the debris trapping part may have an upstream filter which extends to downstream-side from an edge at the upstream-side of the flow path among edges of the trap trench to partially cover the trap trench.
That is, the debris trapping part may include an upstream filter installed at the edge of the trap trench at the upstream-side with respect to the flow path such that the upstream filter extends to downstream side of the flow path and partially covers the trap trench.
According to this configuration, the debris which has entered inside an emergency trap trench flows together with the emergency cooling liquid in the upstream-side of the flow path of the emergency cooling liquid and tends to flow outside the trap trench. At this time, the upstream filter traps the debris contained in the emergency cooling liquid. Thereby, it is possible to effectively prevent the debris which has entered inside the trap trench from flowing into the flow path of the emergency cooling liquid outside the trap trench.

Further, the debris trapping part has an upward extending gate which extends upward from the bottom part of the sump pool.
That is, the debris trapping part may include at the bottom part of the pool a bottom gate installed so as to extend upward from the bottom part.
According to this configuration, the debris which moves so as to turn over around the bottom part of the pool is prevented from moving by the bottom gate (upward extending gate) and trapped.

Further, the debris trapping part may have a downward extending gate which extends from a ceiling part of the sump pool downward and below the liquid level of the emergency cooling liquid.
That is, the debris trapping part may include at a ceiling part of the pool a ceiling gate which is installed so as to extend downward from the ceiling part and arrive below the liquid level of the emergency cooling liquid stored in the pool.
According to this configuration, the debris which is given buoyancy to move near the liquid level of the emergency cooling liquid stored in the pool is trapped by the ceiling gate.

Still further, the debris trapping part may be configured such that the bottom gate is installed on the upstream-side of the flow path and the ceiling gate is installed on the downstream side of the flow path.
According to this configuration, it is possible to easily place an upper end part (leading end) of the bottom gate below the liquid level.

In addition, a plurality of debris trapping parts may be installed.
According to this configuration, it is possible to improve the efficiency of trapping debris by the plurality of debris trapping parts.

### Effect of the Invention

According to the reactor containment structure of the present invention, it is possible to inhibit adhesion of debris to a debris filtering body and simplify the configuration of a opening part.

### BRIEF DESCRIPTION OF DRAWINGS

FIG. 1 is a schematic block diagram of a reactor containment structure 1 of a first embodiment of the present invention.
FIG. 2 is a sectional view which shows major parts of the reactor containment structure 1 of the first embodiment of the present invention, where the sectional view is taken along the line I-I in FIG. 1.
FIG. 3 is an enlarged sectional view of major parts of the reactor containment structure 1 of the first embodiment of the present invention, where the sectional view is taken along the line II-II in FIG. 2.
FIG. 4 is a view which describes actions of the reactor containment structure 1 of the first embodiment of the present invention.
FIG. 5 is a sectional view of major parts of a reactor containment structure 2 of a second embodiment of the present invention, where the drawing corresponds to FIG. 2.
FIG. 6 is an enlarged sectional view of major parts of the reactor containment structure 2 of the second embodiment of the present invention and shows enlarged view of a debris trapping part 40.
FIG. 7 is a sectional view of major parts of a reactor containment structure 3 of a third embodiment of the present invention, where the drawing corresponds to FIG. 2.
FIG. 8 is an enlarged sectional view of major parts of the reactor containment structure 3 of the third embodiment of the present invention and shows an enlarged view of a debris trapping part 50.
FIG. 9 is an enlarged sectional view of a reactor containment structure 4 of a fourth embodiment of the present invention and shows an enlarged view of a debris trapping part 60.
FIG. 10 is a sectional view of major parts showing a first modified example 4A of the reactor containment structure 4 of the fourth embodiment of the present invention.
FIG. 11 is a sectional view of major parts showing a second modified example 4B of the reactor containment structure 4 of the fourth embodiment of the present invention.

### MODE FOR CARRYING OUT THE INVENTION

Hereinafter, embodiments of the present invention will be explained with reference to the drawings.

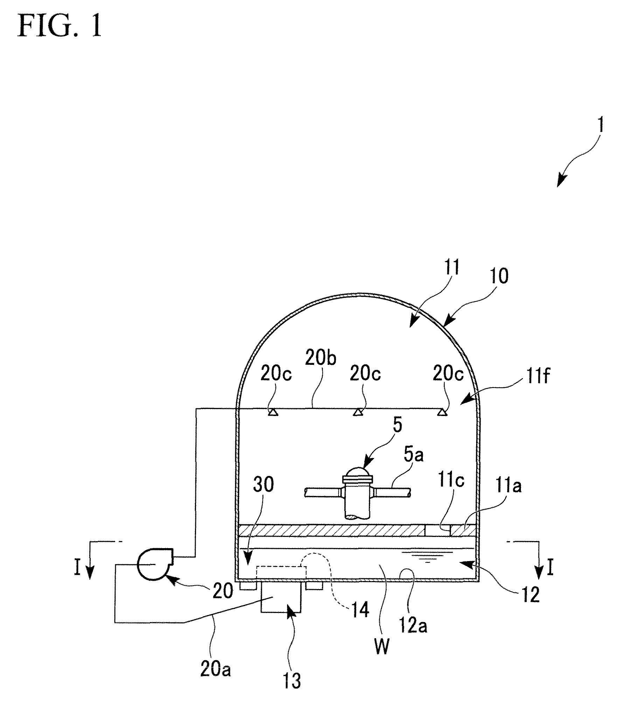

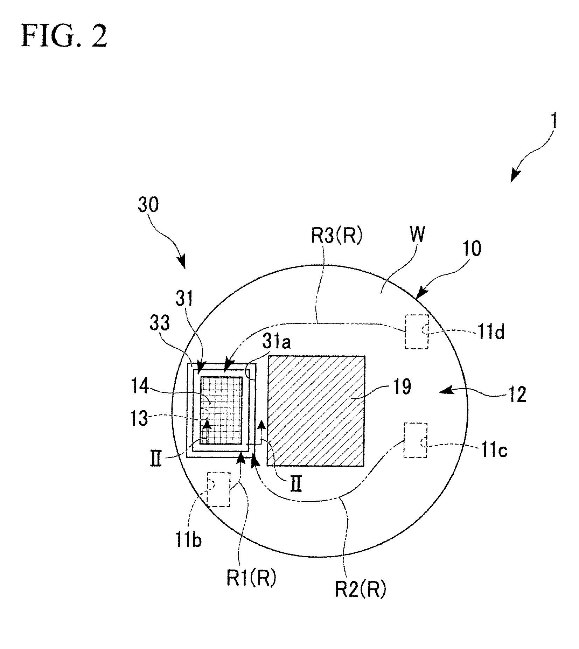

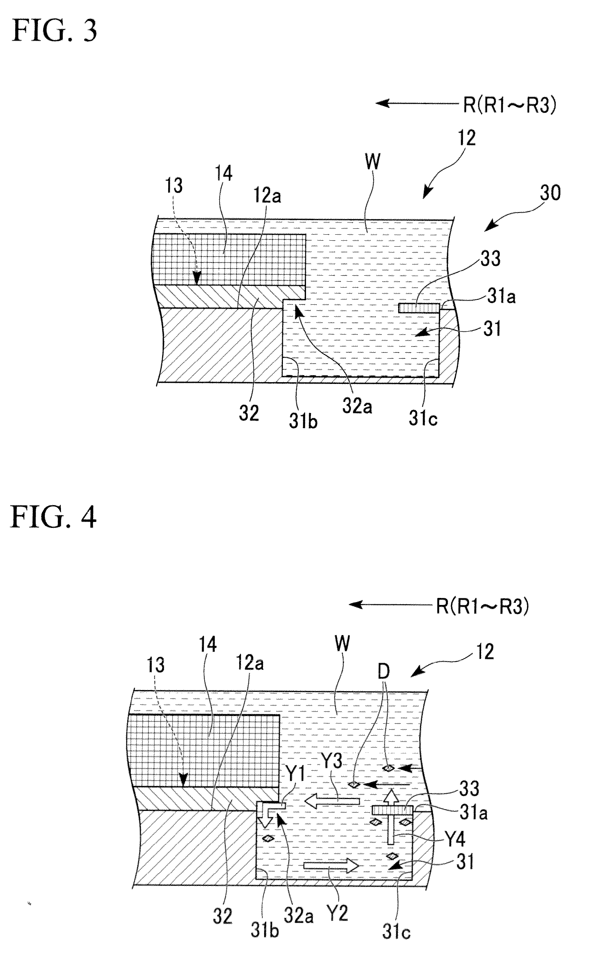

FIG. 1 is a schematic block diagram of the reactor containment structure 1 of the first embodiment of the present invention. FIG. 2 is a sectional view taken along the line I-I in FIG. 1. FIG. 3 is a sectional view taken along the line II-II in FIG. 2.
As shown in FIG. 1, the reactor containment structure 1 is provided with a reactor containment vessel 10 which contains a nuclear power reactor 5 and also with a circulating pump (a pump body, a pumping system) 20.

The reactor containment vessel 10 is provided with a reactor containment chamber 11 which contains the nuclear power reactor 5 and also with a pool (sump pool) 12 in which emergency cooling water (an emergency cooling liquid) W is stored.
The reactor containment chamber 11 is installed inside the reactor containment vessel 10. The reactor containment chamber 11 contains a steam generator, pressurizer, and so on., which are not illustrated, together with the nuclear power reactor 5. Opening parts 11b, 11c, 11d (refer to FIG. 2) which communicate with a lower floor are installed on a floor part 11a of the reactor containment chamber 11.

The pool 12 is installed inside the reactor containment vessel 10 so as to be below the reactor containment chamber 11 adjacently. The emergency cooling water W is stored in the pool 12. That is, the pool 12 is installed on a lower floor of the reactor containment vessel 10 and, more specifically, installed on the basement floor of the reactor containment vessel 10.
As shown in FIG. 1, a circulation sump (sump) 13 is installed below a bottom part 12a of the pool 12. The circulation sump 13 is installed so as to be lower by one step than the bottom part 12a, extending downward from the bottom part 12a. The circulation sump 13 is provided with a sump screen (debris filtering body) 14 for filtering debris such as broken pieces contained in the emergency cooling water W. The sump screen 14 is installed so as to cover an opening part of the circulation sump 13. As shown in FIG. 3, a raised edge (downstream gate) 32 formed higher than the bottom part 12a is formed at an opening part of the circulation sump 13.
As shown in FIG. 2, a structure 19 such as supporting pillars is disposed at the center of the pool 12.

The sump screen 14 is formed in the shape of a box in which one side is opened. The sump screen 14 is installed in such a manner that the opened side is superimposed on an opening part of the circulation sump 13. That is, the sump screen 14 covers the opening part of the circulation sump 13, with the bottom part pointed upward and the opening pointed downward. Further, as shown in FIG. 1, the sump screen 14 is submerged entirely for effectively utilizing its entire area in trapping broken pieces.
In place of the sump screen 14, there may be used a debris filtering body in which plate members having through holes are stacked in a multiple stage.

As shown in FIG. 1, the circulating pump 20 is connected to one end part of a suction side piping 20a. The other end part of the suction side piping 20a is connected to the circulation sump 13 and opened at the circulation sump 13. Further, the circulating pump 20 is connected to a discharge side piping 20b. The discharge side piping 20b is connected to spray nozzles 20c mounted at an upper part 11f of the reactor containment chamber 11.

The reactor containment structure I actuates the circulating pump 20 on occurrence of a loss-of-primary-coolant accident, for example, in association with breakage of a piping part 5a of the nuclear power reactor 5. The circulating pump 20 sucks the emergency cooling water W stored in the pool 12 from the circulation sump 13. The circulating pump 20 discharges the sucked emergency cooling water W through the spray nozzles 20c installed at the upper part 11f of the reactor containment chamber 11. The circulating pump 20 discharges the emergency cooling water W through the spray nozzles 20c to supply the emergency cooling water W to the nuclear power reactor 5, thereby cooling the nuclear power reactor 5.

The emergency cooling water W which has cooled the nuclear power reactor 5 and runs off the floor part 11a flows into the pool 12 from the opening parts 11b, 11c, 11d (refer to FIG. 2). As described so far, the reactor containment structure 1 allows the emergency cooling water W stored in the pool 12 to circulate.

As shown in FIG. 4, the reactor containment structure 1 is provided with a debris trapping part 30. The debris trapping part 30 traps debris D moving toward the sump screen 14. As shown in FIG. 3, the debris trapping part 30 is provided with a trap trench 31, a raised edge 32 (downstream gate) and an upstream filter 33.

As shown in FIG. 2, the trap trench 31 is installed so as to extend in such a direction that intersects with a flow path R (for example, R1 to R3) of the emergency cooling water W. More specifically, the trap trench 31 is installed so as to surround the sump screen 14. As shown in FIG. 3, the trap trench 31 is formed at the bottom part 12a of the pool 12 in the shape of a groove, the cross section of which is rectangular. The trap trench 31 has a width extending from inside an outer edge of the sump screen 14 to outside the outer edge of the sump screen 14. That is, an edge of the trap trench 31 is positioned outside the outer edge of the sump screen 14 at the upstream side of the flow path R. Further, an edge of the trap trench 31 is positioned inside the outer edge of the sump screen 14 at the downstream side of the flow path R.

As shown in FIG. 3, the raised edge 32 is installed on the edge of the trap trench 31 at the downstream end of the flow path R. The raised edge 32 is installed so as to extend upward from the edge at the downstream-side with respect to the flow path R. That is, the raised edge 32 is formed at a periphery of the opening part of the circulation sump 13 so as to be higher by one step than the bottom part 12a of the pool 12. Under an outer edge part of the raised edge 32, there is formed a gouged part 32a which is gouged inside the outer edge of the raised edge 32. The edge of the trap trench 31 at the down stream-side with respect to the flow path R is disposed below the gouge part 32a so as to be smoothly joined to the gouged part 32a. That is, the gouged part 32a is installed in continuation to the trap trench 31 and installed so that the emergency cooling water W can be delivered between the trap trench 31 and the gouged part 32a.

As shown in FIG. 3, an upstream filter 33 is fixed to edge 31a of the trap trench 31 at the upstream-side with respect to the flow path R. The upstream filter 33 is installed so as to extend from the edge 31a of trap trench 31 at the upstream-side with respect to the flow path to the downstream-side of the flow path R (to a direction closer to the circulation sump 13). The upstream filter 33 is installed so as to cover a part of the trap trench 31 at the upstream side of the flow path R. That is, the upstream filter 33 partially covers the trap trench 31, and specifically, a grating is used.

In the reactor containment structure 1, on occurrence of a loss-of-primary-coolant accident, a high-pressure primary coolant is ejected, by which debris D including broken pieces of heat-insulating materials and metal pieces is scattered in the reactor containment chamber 11.
At this time, the circulating pump 20 shown in FIG. 1 is actuated to suck the emergency cooling water W from the circulation sump 13. The circulating pump 20 discharges the sucked emergency cooling water W from the spray nozzles 20c installed at the upper part 11f of the reactor containment chamber 11, thereby supplying the emergency cooling water W to the nuclear power reactor 5. The emergency cooling water W supplied to the nuclear power reactor 5 runs down (cascades) to the floor part 11a after cooling the nuclear power reactor 5.

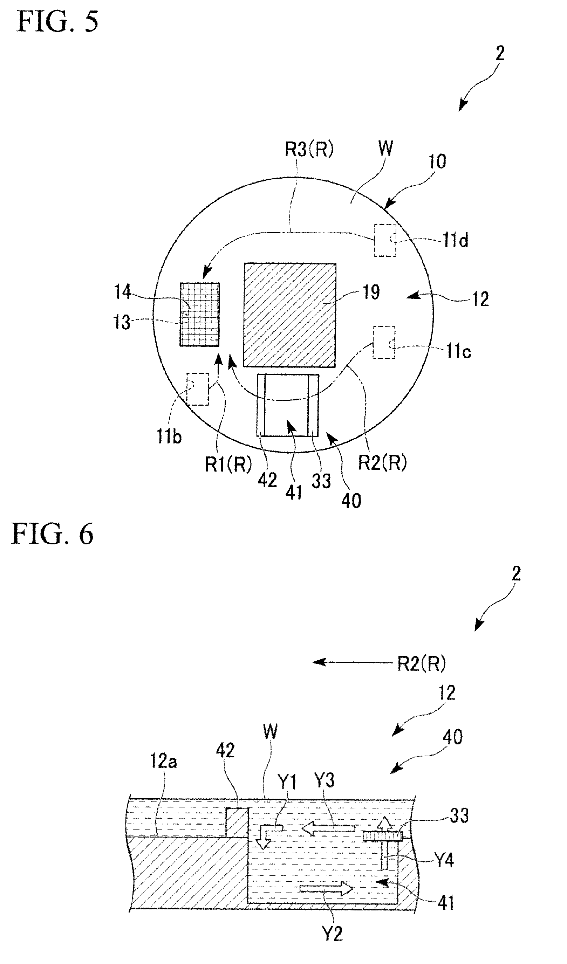

As shown in FIG. 5, the emergency cooling water W which has run down to the floor part 11a flows into the pool 12 from the opening parts 11b, 11c, 11d. The emergency cooling water W which has flowed into the pool 12 flows along the flow path R (R1 to R3) toward the circulation sump 13 illustrated in FIG. 2.

At this time, currents of the emergency cooling water W are developed at the debris trapping part 30 as described below.
As shown in FIG. 3, the emergency cooling water W flows along the flow path R in a horizontal direction above the debris trapping part 30. At this time, some currents of the emergency cooling water W collide with the raised edge 32. Some currents of the emergency cooling water W which have collided with the raised edge 32 flow downward and flow inside the trap trench 31. Further, as shown in FIG. 4, the emergency cooling water W which has flowed inside the gouged part 32a and flowed in a horizontal direction collides with an inner wall 31b and flows inside the trap trench 31 (the arrow Y1).

Inside the upper part of the trap trench 31, the emergency cooling water W is influenced by currents of the external emergency cooling water W (currents in a direction to the circulation sump 13). Then, currents of the emergency cooling water W in the same direction are developed at the upper part of the internal space of the trap trench 31 (the arrow Y3). As a result, reverse currents flowing against the currents of the emergency cooling water W at the upper part are developed at the lower part of the inside space of the trap trench 31 (the arrow Y2). The reversely directed currents of the emergency cooling water W (the arrow Y2) collide with the inner wall 31c of the trap trench 31 and flow upward (the arrow Y4). The upward moving currents of the emergency cooling water W pass through the upstream filter 33 and flow together with currents outside the trap trench 31.
As described above, there are developed swirling currents (the arrows Y1 to Y4) at the debris trapping part 30 along the rectangular cross section of the trap trench 31 shown in FIG. 4.

The debris D which has been scattered on the floor part 11a of the reactor containment chamber 11 shown in FIG. 1 is flowed by the emergency cooling water W and flows into the pool 12 together with the emergency cooling water W. As shown in FIG. 2, the debris D which has flowed into the pool 12 flows along the flow path R toward the circulation sump 13.

In this case, the debris D moving along the flow path R by the currents of the emergency cooling water W is greater in specific gravity than the emergency cooling water W. Therefore, most of the debris D (about 70%) moves so as to turn over around the bottom part 12a. Remaining debris D is given buoyancy by adhesion of bubbles, and so on, moving in the form of floating substances.
Further, some of the debris becomes gelatinous debris by slightly reacting with the emergency cooling water W. Hereinafter, the gelatinous debris is referred to as "chemical debris" for distinguishing it from ordinary debris.

The debris D which has moved so as to turn over around the bottom part 12a of the pool 12 and arrived at the debris trapping part 30 flows into the trap trench 31, together with the emergency cooling water W. The debris D which has flowed into the trap trench 31 is flowed by swirling currents inside the trap trench 31 (the arrows Y1 to Y4) and trapped by the upstream filter 33.
Further, the chemical debris is adhered to the debris D which has been trapped by the upstream filter 33 in such a manner as to be tangled and collected.

The emergency cooling water W which has passed through the upstream filter 33 flows together with currents moving toward the circulation sump 13 and arrives at the sump screen 14. The emergency cooling water W which has arrived at the sump screen 14 passes through the sump screen 14 and flows into the circulation sump 13. At this time, most of the debris D (about 70%) has been trapped by the debris trapping part 30. Therefore, the debris D to be adhered to the sump screen 14 is decreased compared to conventional cases and hardly adhered to the sump screen 14.

As described above, since the debris D is hardly adhered to the sump screen 14, it is possible to prevent the circulating pump 20 from being increased in load or reduced in circulation efficiency. Therefore, the emergency cooling water W is circulated efficiently to maintain good safety of the nuclear power reactor 5.

As so far described, the reactor containment structure 1 of the present invention is provided with the debris trapping part 30 installed so as to intersect with the flow path R of the emergency cooling water W in the pool 12. Therefore, the debris D is trapped on the flow path R of the emergency cooling water W in the pool 12 and the debris D is inhibited from arriving at the sump screen 14. Thereby, it is possible to inhibit adhesion of the debris D to the sump screen 14.
Further, it is not necessary to install a sump structure on the opening parts 11b to 11d or install a sealing mechanism. Therefore, the opening parts 11b to 11d can be simplified in configuration.
Thus, according to the reactor containment structure 1, it is possible to inhibit adhesion of the debris D to the sump screen 14 and simplify the configuration of the opening part 11b to 11d.

Further, the debris trapping part 30 is provided with the trap trench 31 installed at the bottom part 12a of the pool 12. Therefore, it is possible to trap the debris D which moves so as to turn over around the bottom part 12a of the pool 12 by the trap trench 31.
Further, the trap trench 31 surrounds the sump screen 14. Therefore, the trap trench 31 is able to trap more reliably the debris D which moves so as to turn over around the bottom part 12a of the pool 12 and moves to the sump screen 14 from every direction.

Still further, the debris trapping part 30 is provided with the raised edge 32 which extends upward from an edge at the downstream-side with respect to the flow path among edges of the trap trench 31. That is the raised edge 32 extending upward is installed at the edge, at the down stream side with respect to the flow path, of the trap trench 31 of the debris trapping part 30. Therefore, the emergency cooling water W collides with the raised edge 32 to develop strong currents of the emergency cooling water W which flow into the trap trench 31. Thereby, the debris D which flows so as to turn over around the bottom part 12a of the pool 12 flows inside the trap trench 31 due to the currents of the emergency cooling water W. As a result, it is possible to trap the debris D efficiently.

In addition, the debris trapping part 30 is provided with the upstream filter 33 which extends to the downstream side from the edge 31a at the upstream-side with respect to the flow path among edges of the trap trench 31 to partially cover the trap trench 31. That is, the debris trapping part 30 is provided at an edge, at the upstream side of the flow path R, of the trap trench 31 with an upstream filter 33 which extends to downstream side of the flow path R to partially cover the trap trench 31. Therefore, the debris D which tends to flow from the trap trench 31 is trapped at the upstream side of the flow path. It is, thereby, possible to effectively prevent the debris D which has flowed inside the trap trench 31 from flowing in the flow path R (for example, R1 to R3) of the emergency cooling water W outside the trap trench 31.

Next, a description will be given of the second embodiment of the present invention. FIG. 5 is a sectional view which shows major parts of the reactor containment structure 2 of the second embodiment of the present invention. FIG. 6 is an enlarged sectional view which shows major parts of the reactor containment structure 2. In FIG. 5 and FIG. 6, components similar to those described in FIG. 1 to FIG. 4 are given the same reference numerals, with a description omitted here.

As shown in FIG. 5 and FIG. 6, the reactor containment structure 2 is provided with a debris trapping part 40. The debris trapping part 40 is installed so as to extend in such a direction that intersects with the flow path R2 from the opening part 11c to the circulation sump 13.
The debris trapping part 40 is provided with a trap trench 41, a downstream gate 42 and an upstream filter 33.

As shown in FIG. 5, the trap trench 41 is installed at a bottom part 12a of the pool 12 so as to extend in such a direction that intersects with the flow path R2 of the emergency cooling water W. As shown in FIG. 6, the downstream gate 42 is installed along a an edge of trap trench 41 at the downstream-side with respect to the flow path R. The downstream gate 42 is installed so as to extend upward from the bottom part 12a of the pool 12.
At the debris trapping part 40 of the present embodiment as well, there are generated swirling currents (the arrows Y1 to Y4) similar to those found at the debris trapping part 30 of the first embodiment.

That is, according to the reactor containment structure 2, debris D which moves so as to turn over around a bottom part 12a of the pool 12 along the flow path R2 flows into the trap trench 41. The debris D which has flowed into the trap trench 41 moves along a wall surface of the trap trench 41 due to the swirling currents (the arrows Y1 to Y4) inside the trap trench 41, and the debris D is trapped by the upstream filter 33.
Further, chemical debris is adhered to the debris D trapped by the upstream filter 33 so as to be entangled and collected.

As described above, according to the reactor containment structure 2, it is possible to obtain the effects similar to those of the first embodiment. It is also possible to install the debris trapping part 40 in an appropriate manner according to the dimensions and the shape of the pool 12.
The reactor containment structure may be provided with both the debris trapping part 30 of the above-described first embodiment and the debris trapping part 40 of the present embodiment. Thereby, where, for example, the debris D moving along the flow path R2 is greater in amount than the debris D moving along the flow paths R1, R3, it is possible to effectively reduce the amount of the debris D which arrives at the sump screen 14.

The present embodiment is configured so as to install both the downstream gate 42 and the upstream filter 33. However, the reactor containment structure may be provided only with the trap trench 41 in place of installing the downstream gate 42 and the upstream filter 33. In this case, the debris D falls down into the bottom part of the trap trench 41 and is trapped. Further, where a plurality of trap trenches 41 are installed in the flow path R, the debris D can be trapped more effectively.

Next, a description will be given of the third embodiment of the present invention.

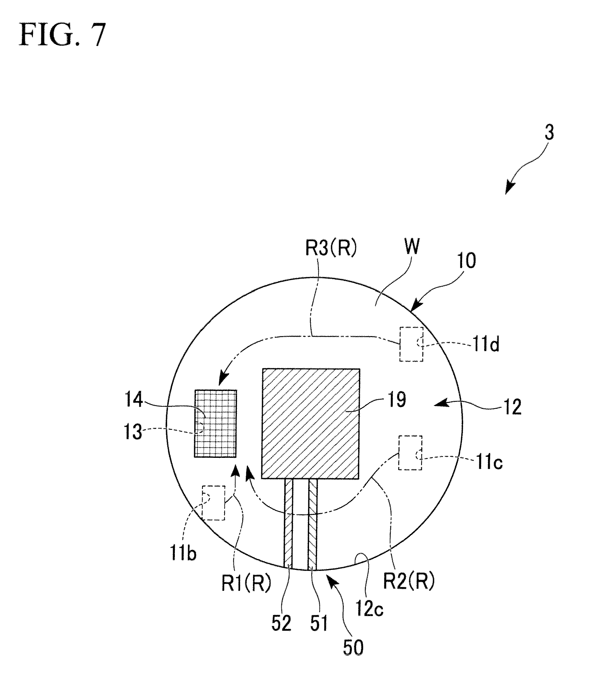

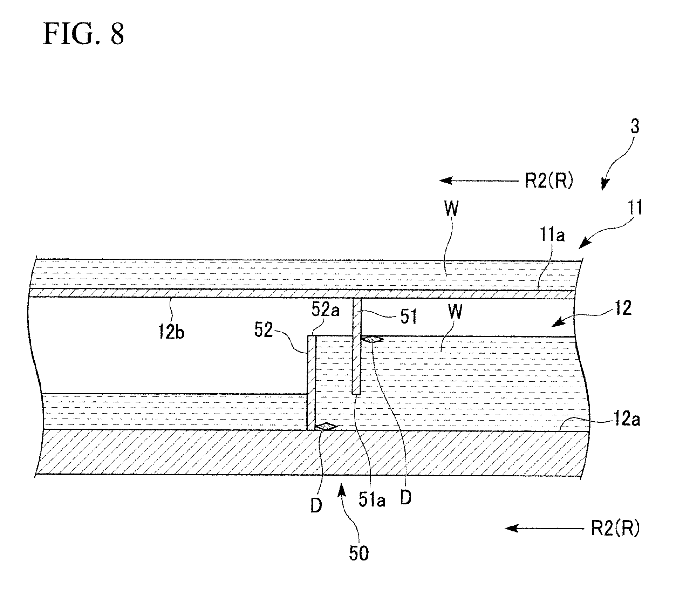

FIG. 7 is a sectional view which shows major parts of the reactor containment structure 3 of the third embodiment of the present invention. FIG. 8 is an enlarged sectional view which shows major parts of the reactor containment structure 3. In FIG. 7 and FIG. 8, the components similar to those described in FIG. 1 to FIG. 6 are given the same reference numerals, with a description omitted here.

As shown in FIG. 7 and FIG. 8, the reactor containment structure 3 is provided with a debris trapping part 50. The debris trapping part 50 has a ceiling gate (downward extending gate) 51 and a bottom gate (upward extending gate) 52.
As shown in FIG. 8, the ceiling gate 51 is installed at the ceiling part 12b positioned above the pool 12. The ceiling gate 51 is installed so as to extend downward from the ceiling part 12b of the pool 12. A lower end part 51a of the ceiling gate 51 is positioned below the liquid level of the emergency cooling water W stored in the pool 12.
The bottom gate 52 is installed at the bottom part 12a of the pool 12. The bottom gate 52 is installed so as to extend upward from the bottom part 12a of the pool 12. An upper end part 52a of the bottom gate 52 is positioned further above than the lower end part 51a of the ceiling gate 51.
As shown in FIG. 7, the ceiling gate 51 and the bottom gate 52 are installed so as to extend in such a direction that intersects with the flow path R2. In each of the ceiling gate 51 and the bottom gate 52, one end part thereof in a horizontal direction is installed in the structure 19, while the other end part thereof in a horizontal direction is installed on the inner wall 12c of the pool 12. Thereby, the ceiling gate 51 and the bottom gate 52 are formed continuously between the structure 19 and the inner wall 12c of the pool 12 so as to block the flow path R2.

The reactor containment structure 3 of the present embodiment develops into a stationary state in which the emergency cooling water W circulates through the pool 12 and the reactor containment chamber 11 on occurrence of a leakage-of-primary-coolant accident. Then, as shown in FIG. 8, in the pool 12, there is found a difference in water level of the emergency cooling water W between the upstream side and the downstream side of the flow path R at the bottom gate 52. Then, the emergency cooling water W flows beyond the upper end part 52a of the bottom gate 52 and runs off to the downstream side.

That is, the emergency cooling water W flowing along the flow path R2 passes between the lower end part 51a of the ceiling gate 51 and the bottom part 12a of the pool 12, thereafter, flows beyond the upper end part 52a of the bottom gate 52, and runs down. At this time, the debris D, which has become floating substances, is stopped and trapped by the ceiling gate 51. Further, the debris D which moves so as to turn over around the bottom part 12a is stopped and trapped by the bottom gate 52. As described above, the debris D moving together with the emergency cooling water W along the flow path R2 is stopped and trapped by the debris trapping part 50. Therefore, the debris D flowing to the downstream side of the debris trapping part 50 is drastically reduced in amount.

As described above, according to the reactor containment structure 3 of the present embodiment, the debris D which is given buoyancy in the emergency cooling water W and becomes floating substances is trapped by the ceiling gate 51. Further, the debris D which moves so as to turn over around the bottom part 12a of the pool 12 is trapped by the ceiling gate 51. Therefore, the debris D flowing to the downstream side of the flow path R2 at the debris trapping part 50 is drastically reduced in amount. Thereby, the debris D is inhibited from arriving at the sump screen 14. As a result, it is possible to inhibit adhesion of the debris D to the sump screen 14.

Further, according to the reactor containment structure 3 of the present embodiment, the ceiling gate 51 is installed in the upstream side of the flow path R2, while the bottom gate 52 is installed in the downstream side of the flow path R2. Therefore, it is possible to reliably dispose the lower end part 51a of the ceiling gate 51 below water.

Next, a description will be given of the fourth embodiment of the present invention.

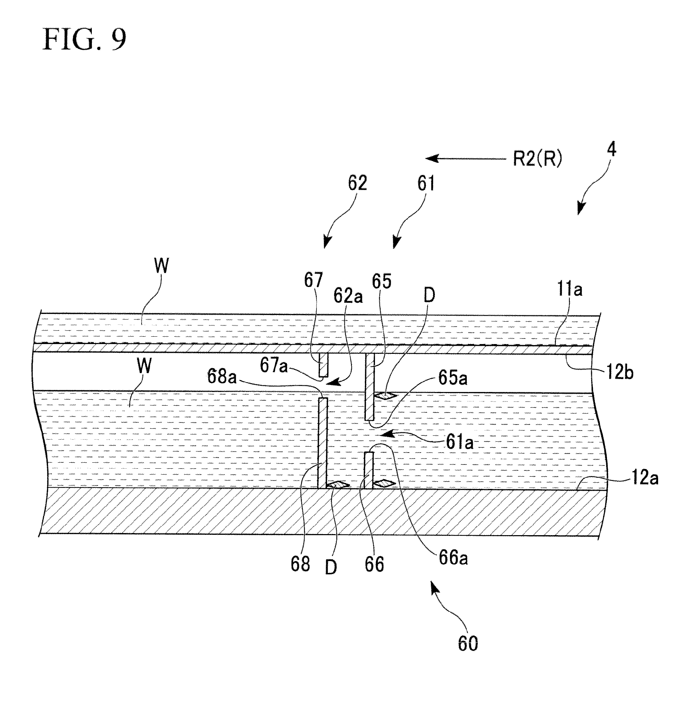

FIG. 9 is an enlarged sectional view which shows major parts of the reactor containment structure 4 of the fourth embodiment of the present invention. In FIG. 9, components similar to those described in FIG. 1 to FIG. 8 are given the same reference numerals, with a description omitted here.

As shown in FIG. 9, the reactor containment structure 4 is provided with a debris trapping part 60. The debris trapping part 60 has a gate unit 61 and a gate unit 62.

The gate unit 61 has a ceiling gate 65 and a bottom gate 66. A lower end part (leading end) 65a of the ceiling gate 65 opposes a lower end part (leading end) 65a of the bottom gate 66, with a clearance 61a kept therebetween.
Further, the gate unit 62 has a ceiling gate 67 and a bottom gate 68. A lower end part (leading end) 67a of the ceiling gate 67 opposes an upper end part (leading end) 68a of the bottom gate 68, with a clearance 62a kept therebetween.

The height of the clearance 61a of the gate unit 61 from the bottom part 12a is set to be lower than the height of the clearance 62a of the gate unit 62 from the bottom part 12a.

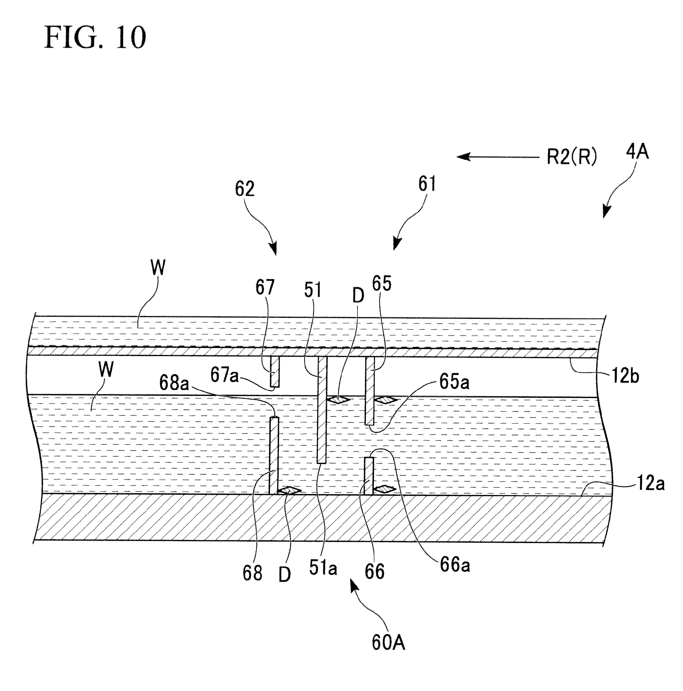

The reactor containment structure 4 of the present embodiment develops a stationary state in which the emergency cooling water W circulates through the pool 12 and the reactor containment chamber 11 on occurrence of a leakage-of primary-coolant accident. At this time, as shown in FIG. 10, there is found no difference in water level of the emergency cooling water W between the upstream side and the downstream side of the bottom gate 52 with respect to the flow path R.

That is, the emergency cooling water W flowing along the flow path R2 passes through the first clearance 61a between the ceiling gate 65 of the first gate unit 61 and the bottom gate 66 thereof and, thereafter, passes through the second clearance 62a between the ceiling gate 67 of the second gate unit 62 and the bottom gate 68 thereof.
On passage of the emergency cooling water W through the first clearance 61a, the debris D which has become floating substances is stopped and trapped by the ceiling gate 65. Further, the debris D which moves so as to turn over around the bottom part 12a is stopped and trapped by the bottom gate 66.
Even if the debris D passes through the first clearance 61a, the debris D which moves so as to turn over around the bottom part 12a is stopped and trapped by the bottom gate 68 of the second gate unit 62.
As described above, the debris D which moves together with the emergency cooling water W flowing along the flow path R2 is stopped and trapped by the debris trapping part 60. Therefore, the debris D which moves to the downstream side of the flow path R at the debris trapping part 60 is drastically reduced in amount.

As so far described, according to the reactor containment structure 4 of the present embodiment, the debris D which has been given buoyancy in the emergency cooling water W and become floating substances is trapped by the ceiling gate 65. Further, the debris D which moves so as to turn over around the bottom part 12a of the pool 12 is trapped by the bottom gates 66, 68. Therefore, the debris D which moves to the downstream side, with respect to the flow path R, of the bottom gate 68 is drastically reduced in amount. Thereby, arrival of the debris D at the sump screen 14 is inhibited. As a result, it is possible to inhibit adhesion of the debris D to the sump screen 14.

Further, according to the reactor containment structure 4 of the present embodiment, by adjusting dimensions of the first clearance 61a and the second clearance 62a, it is possible to adjust the flow rate of the emergency cooling water W during passage.

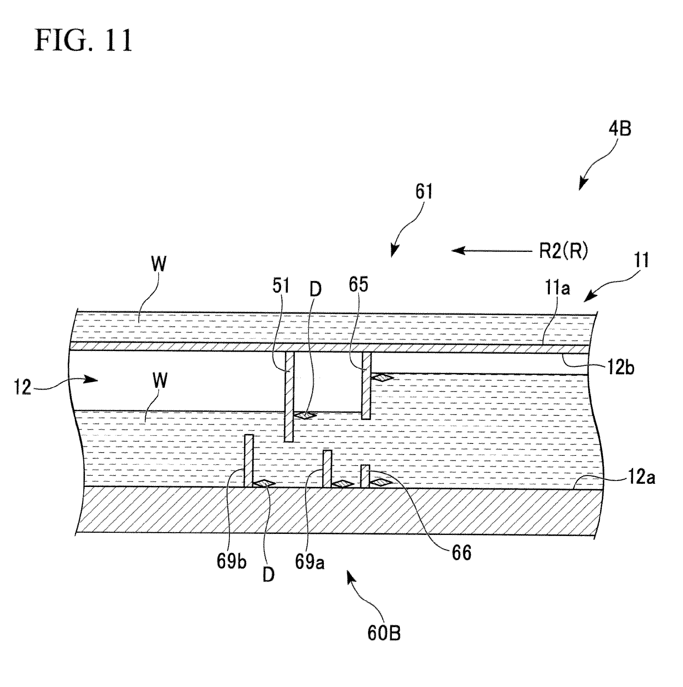

FIG. 10 is an enlarged sectional view for showing major parts of a reactor containment structure 4A which is a first modified example of the reactor containment structure 4 of the fourth embodiment. FIG. 11 is an enlarged sectional view for showing major parts of a reactor containment structure 4B which is a second modified example of the reactor containment structure 4 of the fourth embodiment. In FIG. 10 and FIG. 11, components similar to those described in FIG. 1 to FIG. 9 are given the same reference numerals, and a description thereof are omitted here.

As shown in FIG. 10, the reactor containment structure 4A is provided with a debris trapping part 60A. The debris trapping part 60A has a ceiling gate 51 between a gate unit 61 and a gate unit 62.
Further, as shown in FIG. 11, the reactor containment structure 4B is provided with a debris trapping part 60B. The debris trapping part 60B is provided with a bottom gate 69a, a ceiling gate 51 and a bottom gate 69b in the downstream side, with respect to the flow path R, of the gate unit 61. The bottom gate 69a, the ceiling gate 51 and the bottom gate 69b are disposed in this order from the upstream side of the flow path R.
As with the debris trapping part 60A of the reactor containment structure 4A and the debris trapping part 60B of the reactor containment structure 4B, the ceiling gates and the bottom gates are installed in a plural number in a direction along the flow path R, thus making it possible to improve the efficiency in trapping the debris D.
Further, the debris D which has become floating substances in the emergency cooling water W is made to collide with the ceiling gate and the bottom gate continuously, by which bubbles adhered to the debris D can be removed to settle the debris D.

Procedures, shapes and combinations of individual members shown in the above-described embodiments are only examples and can be modified in various ways based on design requirements, and so on., within a scope not departing from the gist of the present invention.

A description has been so far made for preferred embodiments of the present invention, to which the present invention shall not be, however, restricted. The present invention may be subjected to addition, omission, replacement and other modifications of the configuration within a scope not departing from the gist of the present invention. The present invention shall not be restricted to the above description and will be restricted only by the scope of the adhered claims.

The present invention relates to a reactor containment structure which is provided with a reactor containment vessel, a reactor containment chamber which is installed inside the reactor containment vessel to contain a nuclear power reactor, a pool which is installed inside the reactor containment vessel so as to be below the reactor containment chamber adjacently and in which an emergency cooling liquid is stored, an opening part which allows the emergency cooling liquid to flow from the reactor containment chamber to the pool, a sump which is installed below the pool, a debris filtering body which is installed at the sump to filter debris contained in the emergency cooling liquid, a pumping system which sucks the emergency cooling liquid from the sump to discharge the emergency cooling liquid into the reactor containment chamber, and a debris trapping part which is installed in the pool to trap the debris, in which the debris trapping part intersects with a flow path of the emergency cooling liquid flowing from the opening part to the pool and flowing toward the sump. According to the reactor containment structure of the present invention, it is possible to inhibit adhesion of the debris to the debris filtering body and also simplify a configuration of the opening part of the companion way installed between the pool and the reactor containment chamber.

### Description of Reference Numerals

1, 2, 3, 4, 4A, 4B: reactor containment structure
5: nuclear power reactor
10: reactor containment vessel
11: reactor containment chamber
11a: floor part
11b, 11c, 11d: opening part
11f: upper part
12: pool (sump pool)
12a: bottom part
12b: ceiling part
12c: inner wall
13: circulation sump (sump)
14: sump screen (debris filtering body)
20: circulating pump (pump body, pumping system)
30, 40, 50, 60, 60A, 60B: debris trapping part
31: trap trench
31a, 41a: edge
32: raised edge (downstream gate)
33: upstream filter
42: downstream gate
61, 62: gate unit
61a, 62a: clearance
51, 65, 67: ceiling gate
52, 66, 68, 69a, 69b: bottom gate
51a, 65a, 67a: lower end part (leading end)
52a, 66a, 68a: upper end part (leading end)
R (R1 to R3): flow path
D: debris
W: emergency cooling water (emergency cooling liquid)

## Claims

1. A reactor containment structure, comprising:
a reactor containment vessel;
a reactor containment chamber which is installed inside the reactor containment vessel to contain a nuclear power reactor;
a pool which is installed inside the reactor containment vessel so as to be below the reactor containment chamber adjacently and in which an emergency cooling liquid is stored;
an opening part which allows the emergency cooling liquid to flow from the reactor containment chamber to the pool;
a sump which is installed below the pool;
a debris filtering body which is installed at the sump to filter debris contained in the emergency cooling liquid;
a pumping system which sucks the emergency cooling liquid from the sump to discharge the emergency cooling liquid into the reactor containment chamber; and
a debris trapping part which is installed in the pool to trap the debris,
wherein the debris trapping part intersects with a flow path of the emergency cooling liquid flowing from the opening part to the pool and flowing toward the sump.

2. The reactor containment structure according to claim 1, wherein the debris trapping part has at a bottom part of the pool a trap trench which is installed so as to extend in such a direction that intersects with the flow path of the emergency cooling liquid.

3. The reactor containment structure according to claim 2, wherein the trap trench surrounds the debris filtering body.

4. The reactor containment structure according to claim 2 or claim 3, wherein the debris trapping part includes a downstream gate at an edge of downstream-side of the trap trench with respect to the flow path such that the downstream gate extends upward from the edge of the downstream-side.

5. The reactor containment structure according to any one of claim 2 to claim 4, wherein the debris trapping part includes an upstream filter at an edge of upstream-side of the trap trench with respect to the flow path so as to extend from the edge of upstream-side to downstream-side of the flow path and partially cover the trap trench.

6. The reactor containment structure according to any ane of claim 1 to claim 5, wherein the debris trapping part includes at the bottom part of the pool a bottom gate installed so as to extend upward from the bottom part.

7. The reactor containment structure according to any one of claim 1 to claim 6, wherein the debris trapping part includes at a ceiling part of the pool a ceiling gate which is installed so as to extend downward from the ceiling part and arrive below the liquid level of the emergency cooling liquid stored in the pool.

8. The reactor containment structure according to any one of claim 1 to claim 7, wherein the debris trapping part includes at the bottom part of the pool a bottom gate installed so as to extend upward from the bottom part and at the ceiling part of the pool a ceiling gate installed so as to extend downward from the ceiling part and arrive below the liquid level of the emergency cooling liquid stored in the pool, and
the bottom gate is installed on the upstream side of the flow path, while the ceiling gate is installed on the downstream side of the flow path.

9. The reactor containment structure according to any ane of claim 1 to claim 8, wherein the debris trapping part includes a gate unit having the bottom gate and the ceiling gate, and at the gate unit, the upper end part of the bottom gate opposes the lower end part of the ceiling gate, with a clearance kept therebetween.

10. The reactor containment structure according to any one of claim 1 to claim 10, wherein the debris trapping parts are installed in a plural number.
